# EUROPEAN PATENT APPLICATION

(11) **EP 3 598 738 A1**
(43) Date of publication of application: **22.01.2020**
(21) Application number: 18901815.3
(22) Date of filing: 06.11.2018
(51) Int. Cl.: H04N 5/265

(54) **VIDEO SYNTHESIS METHOD, APPARATUS AND DEVICE, AND VIDEO PLAYING METHOD, APPARATUS AND DEVICE**

(30) Priority: 25.05.2018 CN 201810515542
(71) Applicant: Hangzhou Hikvision System Technology Co., Ltd., Hangzhou, Zhejiang 310051 (CN)
(72) Inventor: HU, Longsheng, Hangzhou, Zhejiang 310051 (CN); ZHOU, Xiaolong, Hangzhou, Zhejiang 310051 (CN); SHEN, Zhiming, Hangzhou, Zhejiang 310051 (CN); LI, Zhonghu, Hangzhou, Zhejiang 310051 (CN)
(74) Representative: BRP Renaud & Partner mbB Rechtsanwälte Patentanwälte Steuerberater
(86) International application number: PCT/CN2018/114066
(87) International publication number: WO 2019/223252

(57) **Abstract**

An embodiment of the present application provides a video merging method. The method includes: merging N to-be-merged videos to obtain a data segment for a merged video file, where N is an integer greater than 1; determining a first position of each to-be-merged video in the merged video file; generating a file header for the merged video file based on the first positions, and obtaining the merged video file including the data segment and the file header. Therefore, the embodiment of the present application allows creating a video file that can be played in multiple windows, and achieves the play back of the merged video file in multiple windows.

## Description

The present application claims the priority to a Chinese Patent Application No. 201810515542.0, filed with the China National Intellectual Property Administration on May 25, 2018 and entitled "Video Merging and Video Playing Methods, Apparatuses and Devices", which is incorporated into the present application by reference in its entirety.

### TECHNICAL FIELD

The present application relates to the technology field of file processing, and in particular to video merging and video playing methods, apparatuses and devices.

### BACKGROUND

In some scenarios, multiple videos are generally merged into a new video so that the videos can be easily analyzed, managed, and viewed.

In existing solutions for video merging, multiple videos are usually merged into a merged video in an order specified by a user. Accordingly, when the merged video is played, the multiple videos will be played successively in the same order, and cannot be played in multiple windows.

For example, the order specified by the user may be such as: video A, video B, and then video C. Thus, these three videos are merged in the specified order into a merged video D. Consequently, when the merged video D is played, the video A, video B and video C will be played successively in that order, and cannot be played simultaneously in different windows.

### SUMMARY

An objective of the embodiments of the present application is to provide video merging and video playing methods, apparatuses, and devices, to obtain a merged video file that can be played in multiple windows and to play the merged video file in multiple windows.

The following specific technical solutions are provided.

An embodiment of the present application provides a video merging method. The method includes:
merging N to-be-merged videos to obtain a data segment for a merged video file, wherein N is an integer greater than 1;
determining a first position of each to-be-merged video in the merged video file; and
generating a file header for the merged video file based on the first positions, and obtaining the merged video file including the data segment and the file header.

Optionally, the method further includes:
for each to-be-merged video, determining a second position of a keyframe of the to-be-merged video in the merged video file, and creating a keyframe index for the to-be-merged video based on the second position;
generating an index segment for the merged video file based on the keyframe indexes of the to-be-merged videos; and
determining a third position of the keyframe index of each to-be-merged video in the merged video file.

Generating a file header for the merged video file based on the first positions, and obtaining the merged video file including the data segment and the file header, includes:
generating the file header for the merged video file based on the first positions and the third positions, and obtaining the merged video file including the data segment, the file header and the index segment.

Optionally, a first position of each to-be-merged video in the merged video file, includes:
determining a data amount of the file header based on N, as a first data amount; and
for each to-be-merged video, determining the first position of the to-be-merged video in the merged video file, based on a position of the to-be-merged video in the data segment and the first data amount.

Determining a second position of a keyframe of the to-be-merged video in the merged video file, includes:
determining the second position of the keyframe of the to-be-merged video in the merged video file, based on a position of the keyframe of the to-be-merged video in the data segment and the first data amount.

Determining a third position of the keyframe index of each to-be-merged video in the merged video file, includes:
determining a sum of data amounts of the N to-be-merged videos, as a second data amount of the data segment; and
for each of the to-be-merged videos, determining the third position of the keyframe index of the to-be-merged video in the merged video file, based on a position of the keyframe index of the to-be-merged video in the index segment, the first data amount and the second data amount.

Optionally, determining a second position of a keyframe of the to-be-merged video in the merged video file, includes:
determining the second position of the keyframe of the to-be-merged video in the merged video file by decoding the to-be-merged video.

Optionally, generating a file header for the merged video file based on the first positions, includes:
acquiring a priority for each to-be-merged video; and
generating the file header for the merged video file based on the first positions and the priorities of the to-be-merged videos.

Optionally, merging N to-be-merged videos to obtain a data segment for a merged video file, includes:
acquiring sequentially the N to-be-merged videos in a set order, and merging the acquired N to-be-merged videos in the order, to obtain the data segment for the merged video file.

Optionally, the method further includes:
compressing the merged video file and a preset player by using a self-extracting algorithm to obtain a self-extracting file.

An embodiment of the present application further provides a video playing method. The method includes:
acquiring a merged video file that includes a file header and a data segment, wherein the data segment includes N sub-videos, with N being an integer greater than 1;
acquiring first positions of a first number of sub-videos from the file header, wherein a first position is a position of a sub-video in the merged video file;
reading the first number of sub-videos from the merged video file based on the first positions; and
opening a first number of windows to play the first number of sub-videos respectively.

Optionally, the merged video file further includes an index segment, and wherein after the merged video file is acquired, and the method further includes:
acquiring third positions of the first number of sub-videos from the file header; wherein a third position is a position of a keyframe index of a sub-video in the merged video file; and
reading the keyframe indexes of the first number of sub-videos from the merged video file based on the third positions.

Opening a first number of windows to play the first number of sub-videos respectively, includes:
determining a position of a keyframe of each sub-video in the merged video file based on a read keyframe index;
opening the first number of windows; and for each of the windows, determining a sub-video for the window, and playing the sub-video in the window based on the position of the keyframe of the sub-video for the window in the merged video file.

Optionally, the file header of the merged video file includes an identifier of each of the sub-videos; and after opening the first number of windows to play the first number of sub-videos respectively, the method further includes:
selecting a second number of target sub-videos based on a selection instruction from a user and the identifier of each of the sub-videos;
determining whether the number of the opened windows is less than a preset threshold; and
if the number of the opened windows is equal to the preset threshold, determining a second number of windows playing videos, and playing the target sub-videos in the determined windows;
if the number of the opened windows is less than the preset threshold, determining a sum of the number of the opened windows and the second number as a third number, and determining whether the third number is greater than the preset threshold;
   if the third number is not greater than the preset threshold, opening new windows to play the target sub-videos;
   if the third number is greater than the preset threshold, determining windows playing videos, the number of which equals to a difference between the third number and the preset threshold, opening a new window or windows, and playing the target sub-videos in the determined window or windows and the new windows.

Optionally, the file header of the merged video file further includes a priority of each of the sub-videos; and closing a window playing a video, includes:
determining a sub-video to be stopped based on the priorities; and
closing a window in which the sub-video to be stopped is being played.

Optionally, the file header of the merged video file further includes a priority of each of the sub-videos; acquiring first positions of a first number of sub-videos from the file header, includes:
acquiring the priority of each of the sub-videos from the file header;
determining the first number of target sub-videos based on the priority of each of the sub-videos; and
acquiring the first positions of the first number of target sub-videos from the file header.

Optionally, acquiring a merged video file, includes:
acquiring a self-extracting file; and
decompressing the self-extracting file to obtain a player and the merged video file.

Acquiring first positions of a first number of sub-videos from the file header, includes:
acquiring, by the player, the first positions of the first number of sub-videos from the file header.

Reading the first number of sub-videos from the merged video file based on the first positions, includes:
reading, by the player, the first number of sub-videos from the merged video file based on the first positions.

Opening a first number of windows to play the first number of sub-videos respectively, includes:
opening, by the player, the first number of windows to play the first number of sub-videos respectively.

An embodiment of the present application further provides a video merging apparatus. The apparatus includes:
a data segment generation module, configured for merging N to-be-merged videos to obtain a data segment for a merged video file, wherein N is an integer greater than 1;
a first position module, configured for determining a first position of each to-be-merged video in the merged video file; and
a file header generation module, configured for generating a file header for the merged video file based on the first positions, and obtaining the merged video file including the data segment and the file header.

An embodiment of the present application further provides a video playing apparatus. The apparatus includes:
a merged video acquisition module, configured for acquiring a merged video file that includes a file header and a data segment, wherein the data segment includes N sub-videos, with N being an integer greater than 1;
a first position acquisition module, configured for acquiring first positions of a first number of sub-videos from the file header, wherein a first position is a position of a sub-video in the merged video file;
a sub-video reading module, configured for reading the first number of sub-videos from the merged video file based on the first positions; and
a sub-video playing module, configured for opening a first number of windows to play the first number of sub-videos respectively.

An embodiment of the present application further provides an electronic device, including a processor and a memory.

The memory is configured for storing a computer program.

The processor is configured for executing the computer program stored in the memory to carry out any of the above video merging methods.

An embodiment of the present application further provides another electronic device, including a processor and a memory.

The memory is configured for storing a computer program.

The processor is configured for executing the program stored in the memory to carry out any of the above video playing methods.

An embodiment of the present application also provides a computer program product including instructions that, when executed on a computer, cause the computer to implement any of the above video merging methods.

An embodiment of the present application also provides another computer program product including instructions that, when executed on a computer, implement any of the above video playing methods.

The embodiments of the present invention provide video merging methods and apparatuses. N to-be-merged videos are merged into a data segment for a merged video file. The first position of each to-be-merged video in the merged video file is then determined, and a file header for the merged video file is generated based on the first positions. The merged video file including the data segment and the file header is thus obtained. In this way, when the merged video file is played, the first positions of the first number of sub-videos may be acquired from the file header of the merged video file; the first number of sub-videos are read from the merged video file based on the first positions; and then a first number of windows are opened to play the first number of sub-videos respectively. Therefore, the embodiments of the present application can generated a merged video file that can be played in multiple windows, and play the merged video file in multiple windows. Of course, any one of the products or methods implementing the present application is not necessarily required to achieve all of the advantages described above at the same time.

### BRIEF DESCRIPTION OF THE DRAWINGS

In order to more clearly describe the technical solutions of the embodiments of the present application and the prior art, accompanying drawings that are used for the embodiments and the prior art will be briefly described below. Obviously, the accompanying drawings described below are for only some of the embodiments of the present application. Those skilled in the art may also obtain other drawings based on the drawings herein without any creative efforts.
FIG. 1 shows a first schematic flowchart of a video merging method provided by an embodiment of the present application.
FIG. 2 is a schematic diagram showing the structure of a merged video file generated by an embodiment of the present application.
FIG. 3 is a schematic diagram showing a self-extracting file generated by an embodiment of the present application.
FIG. 4 shows a second schematic flowchart of a video merging method provided by an embodiment of the present application.
FIG. 5 show a schematic flowchart of a video playing method provided by an embodiment of the present application.
FIG. 6 shows a second flowchart of a video playing method provided by an embodiment of the present application.
FIG. 7 is a schematic diagram showing the structure of a video merging apparatus provided by an embodiment of the present application.
FIG. 8 is a schematic diagram showing the structure of a video playing apparatus provided by an embodiment of the present application;
FIG. 9 is a schematic diagram showing the structure of an electronic device provided by an embodiment of the present application.
FIG. 10 is a schematic diagram showing another electronic device provided by an embodiment of the present application.

### DETAILED DESCRIPTION

In order to make the objective, technical solutions, and advantages of the present application more clear and understandable, the embodiments of the present application will be described in details below with reference to the accompanying drawings. Obviously, the described embodiments are only some, instead of all, of the embodiments of the present application. Any other embodiments obtained by those skilled in the art based on the embodiments herein without any creative efforts falls into the protection scope of the present application.

The technical solutions in the embodiments of the present application will be described clearly and completely below in combination with the accompanying drawings. Obviously, the embodiments described herein are merely some instead of all of the embodiments of the present application. All other embodiments obtained by those skilled in the art based on the embodiments herein without any creative efforts shall fall within the protection scope of the present application.

In the related art, multiple videos are usually merged in an order specified by a user into a merged video file. Accordingly, when the merged video is played, the multiple videos therein will be played successively in the same order, and cannot be played in multiple windows.

In order to obtain a video file that can be played in multiple windows, embodiments of the present application provide a video merging method and apparatus. The solution may be applied to various electronic devices such as computers, mobile terminals, video recorders and the like.

The video merging method provided by an embodiment of the present application is generally described below.

In an implementation, the above video merging method includes:
merging N to-be-merged videos to obtain a data segment for a merged video file, wherein N is an integer greater than 1;
determining a first position of each to-be-merged video in the merged video file; and
generating a file header for the merged video file based on the first positions, and obtaining the merged video file including the data segment and the file header.

Accordingly, in order to play the merged video file that can be played in multiple windows, embodiments of the present application provide a video playing method and apparatus. The solution may be applied to various electronic devices such as computers, mobile terminals, video recorders and the like.

The video playing method provided by an embodiment of the present application is generally described below.

In an implementation, the above video playing method includes:
acquiring a merged video file that includes a file header and a data segment, wherein the data segment includes N sub-videos, with N being an integer greater than 1;
acquiring first positions of a first number of sub-videos from the file header, wherein a first position is a position of a sub-video in the merged video file;
reading the first number of sub-videos from the merged video file based on the first positions; and
opening a first number of windows to play the first number of sub-videos respectively.

It can be seen from above, with the video merging method provided by the embodiment of the present application, a video file that can be played in multiple windows can be obtained, and the playback of the video file in multiple windows is achieved.

The video merging method provided by the embodiment of the present application will be described in details below with specific embodiments.

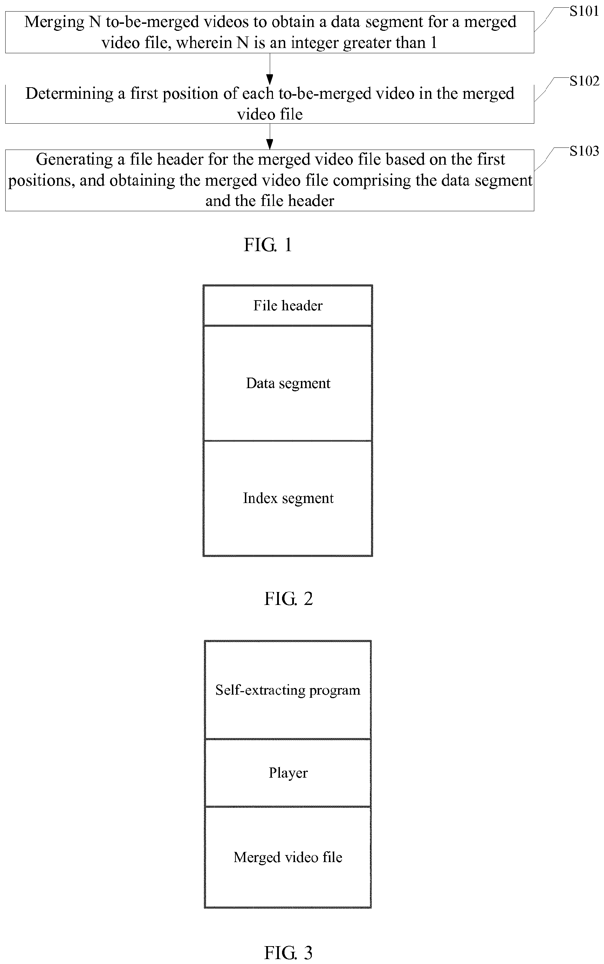

FIG. 1 shows a first schematic flowchart of a video merging method provided by an embodiment of the present application. The method includes steps S101-S103.

At S101, N to-be-merged videos are merged to obtain a data segment for a merged video file. N is an integer greater than 1.

In some scenarios, multiple videos are often merged into one video file such that the videos can be easily analyzed, managed and viewed. For example, all episodes of a TV series may be merged into a video for easy download and view by a user. For another example, surveillance video clips captured by various cameras in some area may be merged into a video to facilitate browsing and review of the surveillance videos in the area.

The to-be-merged videos may be selected by a user. For example, the user may select N desired videos from multiple candidate videos as the to-be-merged videos. The user may also select N desired cameras from multiple cameras, and use videos captured by the N cameras as the to-be-merged videos. Alternatively, the to-be-merged videos may be determined according to a preset rule. For example, videos captured by N cameras every one hour may be used as the to-be-merged videos. How the to-be-merged videos are acquired and the value of N will not be limited herein.

After the N to-be-merged videos are determined, the to-be-merged videos can be merged into a data segment for the merged video file.

In an implementation, the N to-be-merged videos may be sequentially acquired according to a set order. The acquired N to-be-merged videos are then merged in the order in which they are acquired, to generate the data segment for the merged video file. The above set order, for example, may be an order same as that in which the user selects the to-be-merged videos; may be the chronological order of content in the to-be-merged videos; or may also be an order set based on the serial numbers of cameras that captured the to-be-merged videos. In this way, the data segment for the merged video file are well organized and easy to review and manage.

Alternatively, after the N to-be-merged videos are determined, the N to-be-merged videos may be acquired and merged in a random order, rather than in a preset order, which is not limited herein.

At S102, a first position of each to-be-merged video in the merged video file is determined.

After the data segment for the merged video file is obtained, the first position of each of the to-be-merged videos in the merged video file can be determined. The first position may contain the start position and end position of the to-be-merged video in the merged video file.

Specifically, after the data segment for the merged video file is obtained, the data amount of the file header for the merged video file may be first determined based on the number of the to-be-merged videos, i.e., the value of N. In this embodiment, the file header is composed of multiple fields, each of which represents different information and has a fixed length. Some of the fields represent information of different to-be-merged videos. Thus, the number of fields in the file header can be determined based on the number N of the to-be-merged videos, and the data amount of the file header can then be determined. For ease of explanation, in the embodiments of the present application, the data amount of the file header is referred to as a first data amount.

Next, for each of the to-be-merged videos, the first position of the to-be-merged video in the merged video file can be determined based on the position of the to-be-merged video in the data segment and the first data amount. The file header for the merged video file is usually before the data segment, and the first position of the to-be-merged video in the merged video file can be obtained by adding the first data amount to the position of the to-be-merged video in the data segment to obtain

For ease of explanation, in the embodiments of the present application, the position of the to-be-merged video in the merged video file is referred to as the first position.

At S103, a file header for the merged video file is generated based on the first positions, and the merged video file including the data segment and the file header is obtained.

In the embodiment of the present application, after the first position of each to-be-merged video in the merged video file is determined, the file header for the merged video file can then be generated. The file header for the merged video file contains the first position of each of the to-be-merged videos in the merged video file.

In an implementation, the file header for the merged video file may further contain the priority of each to-be-merged video. When the merged video file is played, the to-be-merged videos therein may be played based on the priorities of the to-be-merged videos, for example, a to-be-merged video with a higher priority is played first, and a to-be-merged video with a lower priority is played latter. In this way, the user can quickly learn which part in the merged video file is of importance.

In addition, the file header for the merged video file may further contain an identifier of each to-be-merged video, such as the name or ID of the to-be-merged video. In this way, when the merged video file is opened, the identifiers of respective to-be-merged videos may be displayed, allowing the user to select an identifier from the identifiers of the to-be-merged videos. The to-be-merged video with the identifier selected by the user is then played.

Also, the file header for the merged video file may further contain other information about the merged video file, such as the version of the merged video file, the number of to-be-merged videos that are merged into the merged video file, the size of the merged video file, and the like.

In a case where the merged video file includes two parts, namely, a file header and a data segment. Thus, once the data segment and the file header for the merged video file are obtained, the merged video file is obtained.

In an implementation, the merged video file includes an index segment in addition to the file header and the data segment. The index segment maintains indexes indicating where the keyframes of respective to-be-merged videos are in the index segment. With the index of the keyframe, the position of the keyframe of a to-be-merged video can be quickly located when it is to be played.

The addition of an index segment to the merged video file allows the merged video file to be loaded faster. In loading the indexes of keyframes in the merged video file, the index of the keyframe of each to-be-merged video can be acquired directly from the index segment without scanning the entire merged video file. As a result, even there are a large number of to-be-merged videos, the process of loading the indexes of the keyframes will not be slow.

Specifically, the step of generating the index segment for the merged video file may include the following operations.

For each of the to-be-merged video, firstly, the second position of the keyframe of the to-be-merged video in the merged video file is determined. A to-be-merged video may be decoded to determine the second position of the keyframe of the to-be-merged video in the merged video file may be determined.

For ease of explanation, in the embodiment of the present application, the position, in the merged video file, of the keyframe of a to-be-merged video is referred to as the second position.

The manner of determining the second position of the keyframe of a to-be-merged video in the merged video file may be similar to the determination of the first position of each to-be-merged video in the merged video file. Specifically, the first data amount of the file header of the merged video file is first determined based on the number of the to-be-merged videos, i.e., the value of N. The second position of the keyframe of the to-be-merged video in the merged video file is then obtained based on the position of the key frame of the to-be-merged video in the data segment and the first data amount, for example, by adding up the first data amount and the position of the key frame in the data segment.

Next, a keyframe index for the to-be-merged video is created based on the second position. The keyframe index may be a pointer pointing to the keyframe of the to-be-merged video, an identifier of the keyframe, or others that can identify the position of the keyframe.

Lastly, the index segment for the merged video file is generated based on the keyframe indexes of the to-be-merged videos. In the index segment, the position of the keyframe index for each to-be-merged video may be the same as the position of the to-be-merged video in the data segment, to facilitate the checking and modification of the merged video files. Alternatively, the position of the keyframe index for each to-be-merged video may also be different from the position of the to-be-merged video in the data segment, as long as the correspondence between the keyframe index of the to-be-merged video and the merged video can be identified, which is not limited herein.

In the case that the merged video file further include an index segment, the file header of the merged video file may also include a third position of the keyframe index for each to-be-merged video in the merged video file. In this way, the position of the keyframe index for a to-be-merged video can be determined by analyzing the file header of the merged video file, which further improves the speed of loading the merged video file.

For ease of explanation, in the embodiment of the present application, the position of the keyframe index for the to-be-merged video in the merged video file is referred to as the third position.

As shown in FIG. 2, the merged video file includes a file header, a data segment and an index segment. The file header is at the beginning of the merged video file, the data segment is after the file header, and the index segment is after the data segment. In this case, the determination of the third position of the keyframe index for each to-be-merged video in the merged video file may include the following operations.

Firstly, the first data amount of the file header of the merged video file is determined based on the number of the to-be-merged videos, i.e., the value of N. Next, the total data amount of the N to-be-merged videos is determined as the data amount of the data segment, which is referred to as the second data amount for ease of explanation. The first data amount, the second data amount, and the position of the keyframe index of each to-be-merged video in the index segment are added to obtain the third position of the keyframe index of the to-be-merged video in the merged video file.

Further, in an implementation, after the merged video file is obtained, the merged video file and a preset player may be compressed using a self-extracting method to obtain a self-extracting file. The preset player is a player capable of playing the merged video file obtained by the embodiment of the present application. The structure of the self-extracting file is as shown in FIG. 3.

The self-extracting file can be automatically decompressed without a compression tool. Therefore, a user can decompress the self-extracting file to extract the preset player and the merged video file to a specified location by means of the self-extracting program. During the decompression, the decompression progress may be displayed in real time. The user can obtain the merged video file and the player capable of playing the merged video file from the self-extracting file, which saves the user from downloading and installing a player, and also improves the probability of a successful playback of the merged video file.

As seen from above, in the video merging method provided by the embodiment of the present invention, N to-be-merged videos are merged into a data segment for a merged video file. The first position of each to-be-merged video in the merged video file is then determined, and a file header for the merged video file is generated based on the first positions. The merged video file including the data segment and the file header is thus obtained. The obtained merged video file is a video file that can be played in multiple windows.

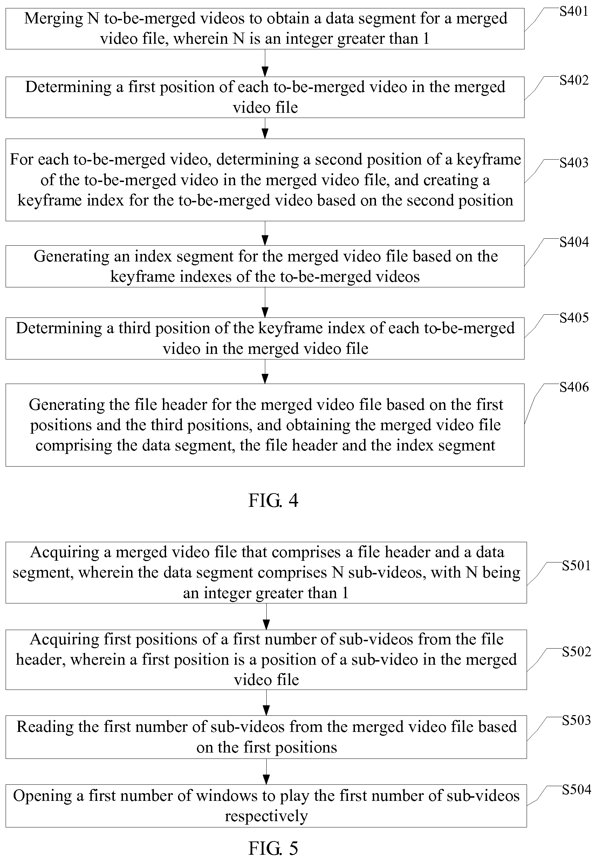

FIG. 4 shows a second schematic flowchart of a video merging method provided by an embodiment of the present application. The method includes the steps S401-S406.

At S401, N to-be-merged videos are merged to obtain a data segment for a merged video file, where N is an integer greater than 1.

In some scenarios, multiple videos are often merged into one video file such that the videos can be easily analyzed, managed and viewed. For example, all episodes of a TV series may be merged into a video for easy download and view by a user. For another example, surveillance video clips captured by various cameras in some area may be merged into a video to facilitate browsing and review of the surveillance videos in the area.

The to-be-merged videos may be selected by a user. For example, the user may select N desired videos from multiple candidate videos as the to-be-merged videos. The user may also select N desired cameras from multiple cameras, and use videos captured by the N cameras as the to-be-merged videos. Alternatively, the to-be-merged videos may be determined according to a preset rule. For example, videos captured by N cameras every one hour may be used as the to-be-merged videos. How the to-be-merged videos are acquired and the value of N will not be limited herein.

After the N to-be-merged videos are determined, the to-be-merged videos can be merged into a data segment for the merged video file.

In an implementation, the N to-be-merged videos may be sequentially acquired according to a set order. The acquired N to-be-merged videos are then merged in the order in which they are acquired, to generate the data segment for the merged video file. The above set order, for example, may be an order same as that in which the user selects the to-be-merged videos; may be the chronological order of content in the to-be-merged videos; or may also be an order set based on the serial numbers of cameras that captured the to-be-merged videos. In this way, the data segment for the merged video file are well organized and easy to review and manage.

Alternatively, after the N to-be-merged videos are determined, the N to-be-merged videos may be acquired and merged in a random order, rather than in a preset order, which is not limited herein.

At S402, a first position of each to-be-merged video in the merged video file is determined.

After the data segment for the merged video file is obtained, the first position of each of the to-be-merged videos in the merged video file can be determined.

Specifically, after the data segment for the merged video file is obtained, the data amount of the file header for the merged video file may be first determined based on the number of the to-be-merged videos, i.e., the value of N. In this embodiment, the file header is composed of multiple fields, each of which represents different information and has a fixed length. Some of the fields represent information of different to-be-merged videos. Thus, the number of fields in the file header can be determined based on the number N of the to-be-merged videos, and the data amount of the file header can then be determined. For ease of explanation, in the embodiments of the present application, the data amount of the file header is referred to as a first data amount.

Next, for each of the to-be-merged videos, the first position of the to-be-merged video in the merged video file can be determined based on the position of the to-be-merged video in the data segment and the first data amount. The file header for the merged video file is usually before the data segment, and the first position of the to-be-merged video in the merged video file can be obtained by adding the first data amount to the position of the to-be-merged video in the data segment to obtain

For ease of explanation, in the embodiments of the present application, the position of the to-be-merged video in the merged video file is referred to as the first position.

At S403, for each of the to-be-merged videos, second position of a keyframe of the to-be-merged video in the merged video file is determined, and an index of the keyframe of the to-be-merged video is created based on the second position.

Specifically, the step of creating the index of the keyframe of the to-be-merged video may include the following operations.

For each of the to-be-merged video, firstly, the second position of the keyframe of the to-be-merged video in the merged video file is determined. A to-be-merged video may be decoded to determine the second position of the keyframe of the to-be-merged video in the merged video file may be determined.

For ease of explanation, in the embodiment of the present application, the position, in the merged video file, of the keyframe of a to-be-merged video is referred to as the second position.

The manner of determining the second position of the keyframe of a to-be-merged video in the merged video file may be similar to the determination of the first position of each to-be-merged video in the merged video file. Specifically, the first data amount of the file header of the merged video file is first determined based on the number of the to-be-merged videos, i.e., the value of N. The second position of the keyframe of the to-be-merged video in the merged video file is then obtained based on the position of the key frame of the to-be-merged video in the data segment and the first data amount, for example, by adding up the first data amount and the position of the key frame in the data segment.

Next, a keyframe index for the to-be-merged video is created based on the second position. The keyframe index may be a pointer pointing to the keyframe of the to-be-merged video, an identifier of the keyframe, or others that can identify the position of the keyframe.

The position of the keyframe of each to-be-merged video may be quickly positioned by querying the index of the keyframe, when playing the merged video. Adding an index segment to the merged video file can improve the speed of the loading of the merged video file.

At S404, an index segment for the merged video file is generated based on keyframe indexes of respective to-be-merged videos.

The index segment maintains the keyframe index for each of the to-be-merged videos. In the index segment, the position of the keyframe index for each to-be-merged video may be the same as the position of the to-be-merged video in the data segment, to facilitate the checking and modification of the merged video files. Alternatively, the position of the keyframe index for each to-be-merged video may also be different from the position of the to-be-merged video in the data segment, as long as the correspondence between the keyframe index of the to-be-merged video and the merged video can be identified, which is not limited herein.

When loading the indexes of keyframes of the merged video file, the keyframe indexes for respective to-be-merged videos may be obtained directly from the index segment without scanning the entire merged video file, such that the loading of the indexes of the keyframes will not be slow even if there is a large number of to-be-merged videos.

At S405, a third position of the keyframe index of each of the to-be-merged videos in the merged video file is determined.

The file header for the merged video file further includes the third position, in the merged video file, of the keyframe index for each of the to-be-merged videos. Thus, the position of the index of the keyframe of the to-be-merged video can be determined by analyzing the file header of the merged video file, which further improves the speed of the loading of the merged video file.

For ease of explanation, in the embodiment of the present application, the position, in the merged video file, of the keyframe index for a to-be-merged video is referred to as the third position.

The determination of the third position of the keyframe index for each to-be-merged video in the merged video file may include the following operations.

Firstly, the first data amount of the file header of the merged video file is determined based on the number of the to-be-merged videos, i.e., the value of N. Next, the total data amount of the N to-be-merged videos is determined as the data amount of the data segment, which is referred to as the second data amount for ease of explanation. The first data amount, the second data amount, and the position of the keyframe index of each to-be-merged video in the index segment are added to obtain the third position of the keyframe index of the to-be-merged video in the merged video file.

In the embodiment of the present application, the order between S402 and S403-405 is not limited. That is, the determination of the first position of each of the to-be-merged videos in the merged video file may first performed; or the determination of the third position of the keyframe index of each of the to-be-merged videos in the merged video file may be first performed; or the both of them may also be performed simultaneously.

At S406, the file header for the merged video file is generated based on the first position and the third position, and the merged video file including the data segment, the file header and the index segment is obtained.

In the embodiment of the present application, when the first position and the third position of each of the to-be-merged videos in the merged video file are determined, the file header for the merged video file can be generated. In other words, the file header for the merged video file includes the first position of each to-be-merged video in the merged video file and the third position of the keyframe index for each to-be-merged video in the merged video file.

In an implementation, the file header for the merged video file may further contain the priority of each to-be-merged video. When the merged video file is played, the to-be-merged videos therein may be played based on the priorities of the to-be-merged videos, for example, a to-be-merged video with a higher priority is played first, and a to-be-merged video with a lower priority is played latter. In this way, the user can quickly learn which part in the merged video file is of importance.

In addition, the file header for the merged video file may further contain an identifier of each to-be-merged video, such as the name or ID of the to-be-merged video. In this way, when the merged video file is opened, the identifiers of respective to-be-merged videos may be displayed, allowing the user to select an identifier from the identifiers of the to-be-merged videos. The to-be-merged video with the identifier selected by the user is then played.

Also, the file header for the merged video file may further contain other information about the merged video file, such as the version of the merged video file, the number of to-be-merged videos that are merged into the merged video file, the size of the merged video file, and the like.

In a case where the merged video file includes three parts, namely, a file header, a data segment and an index segment. Therefore, once the data segment, the index segment and the file header for the merged video file are obtained, the merged video file is obtained. The file header is the first part of the merged video file, the data segment is after the file header, and the index segment is after the data segment.

Further, in an implementation, after the merged video file is obtained, the merged video file and a preset player may be compressed using a self-extracting method to obtain a self-extracting file. The preset player is a player capable of playing the merged video file obtained by the embodiment of the present application.

The self-extracting file can be automatically decompressed without the aid of a compression tool. Therefore, a user can decompress the self-extracting file to extract the preset player and the merged video file to a specified location by means of a self-extracting program in the self-extracting file. During the decompression, the decompression progress may be displayed in real time. After the decompression is finished, the player obtained from the self-extracting file may be automatically started to play the merged video file. Thereby, there is no need for the user to download and install a player, and the probability of a successful playback of the merged video file is increased.

As seen from above, in the video merging method provided by the embodiment of the present invention, N to-be-merged videos are merged into a data segment for a merged video file. The first position of each to-be-merged video in the merged video file is then determined, and a file header for the merged video file is generated based on the first positions. The merged video file including the data segment and the file header is thus obtained. The obtained merged video file is a video file that can be played in multiple windows.

Corresponding to the above video merging methods, an embodiment of the present application further provides a video playing method for performing multiple-window playing of an obtained merged video file that can be played in multiple windows.

FIG. 5 shows a schematic flowchart of a video playing method provided by an embodiment of the present application. The method includes the steps S501-S504.

At S501, a merged video file including a file header and a data segment is acquired. The data segment includes N sub-videos, with N being an integer greater than 1.

The merged video file is generated by merging multiple sub-videos by using the video synthesis method provided by the embodiments of the present application.

In an implementation, the merged video file and a player are compressed using a self-extracting method. The self-extracting file is obtained before the merged video file is acquired. A user can decompress the self-extracting file to extract the player and the merged video file to a specified position by means of a self-extracting program in the self-extracting file. During the decompression, the decompression progress may also be displayed in real time. In this way, the merged video file is acquired from the self-extracting file. At the same time, the player that can play the merged video file is also acquired, and then the merged video file can be analyzed and played by the player. This saves the user from downloading and installing the player, and also increases the probability of a successful playback of the merged video file.

At S502, first positions of a first number of sub-videos are acquired from the file header. The first position of a sub-video is the position of the sub-video in the merged video file.

When playing the merged video file, the header of the merged video file is first analyzed to acquire the first position of each of the first number of sub-videos therein, which indicates where the sub-video is in the merged video file.

The first number may be the same as the number N of all sub-videos in the merged video file, that is, the first positions of all of the sub-videos in the merged video file may be acquired at the same time. The first number may also be different from the number N of all sub-videos in the merged video file. The first number may be set by an electronic device based on its conditions, such as the memory, computing power, etc.; or may be manually set by a user based on his or her needs; or may also be set randomly, which is not limited herein.

In an implementation, the file header of the merged video file further includes a priority of each of the sub-videos. In this way, the priorities of the sub-videos may be taken into consideration in acquiring the first positions of the first number of sub-videos from the file header.

First, the priority of each of the sub-videos is acquired from the file header, and the first number of target sub-videos are determined based on the priorities of respective the sub-videos. The first positions of the first number of target sub-videos are then acquired from the file header. The target sub-videos may be a first number of sub-videos with a maximum priority; or may be selected, based on a preset selection rule, from the sub-videos which are sorted by priority, which is not limited in the embodiment of the present application.

In addition, in an implementation, the file header of the merged video file may include an identifier of each of the sub-videos, such as the names or IDs of the sub-videos. After the merged video file is opened, the identifier of each of the sub-videos may be displayed, and the first number of target sub-videos may be determined based on a user's selection.

At S503, the first number of sub-videos are read from the merged video file based on the first positions.

The first position is the position where the sub-video is located in the merged video file. Therefore, the sub-videos can be positioned based on their first positions, the first number of sub-videos can then be read from the respective positions of the data segment in the merged video file.

At S504, a first number of windows are opened to play the first number of sub-videos respectively.

After the first number of sub-videos are read out, the first number of windows can be opened, and the sub-videos can be played respectively in the windows. After some of the sub-videos have been played, other sub-videos that have not been played may be played subsequently.

In an implementation, the file header of the merged video file further includes identifiers of respective sub-videos, such as names or IDs of the sub-videos. In this way, when the merged video file is opened, the identifier of each of the sub-videos may be displayed simultaneously, so that the user can select an identifier from the identifiers of the sub-videos. The sub-video associated with the identifier selected by the user is then played.

For example, a user's selection instruction may be received at any time during the playing of the sub-videos, and a second number of sub-videos that the user wants to play are then determined.

For example, after step S504, if the user's selection instruction is received, it can be determined whether the number of the opened windows is less than a preset threshold. If the number of the opened windows is equal to the preset threshold, a second number of windows playing videos are closed, and a second number of windows are reopened to play the target sub-videos. If the number of the opened windows is less than the preset threshold, the sum of the number of the opened windows and the second number is determined as a third number, and it is determined whether the third number is greater than the preset threshold. If the third number is not greater than the preset threshold, new windows will be opened to play the target sub-videos. If the third number is greater than the preset threshold, windows playing videos, the number of which equals to the difference between the third number and the preset threshold, are determined and new windows are opened, to play the target sub-videos in the determined windows and the newly opened windows. The preset threshold may be set by an electronic device based on such as its memory or the utilization rate of resources, or may be set by a user based on his or her playing requirement, which is not limited herein.

For example, the merged video file includes 5 sub-videos (N is 5), i.e., a sub-video 1, a sub-video 2, a sub-video 3, a sub-video 4 and a sub-video 5. A user selects 2 of the sub-videos to play. It is assumed that the electronic device supports at most 5 windows to play sub-videos simultaneously. If 5 windows have been opened currently, 2 of the windows that are playing video may be closed, and then the 2 windows are reopened to play the target sub-videos. Alternatively, instead of closing the windows, the videos that are being played in the 2 windows are stopped and the target sub-videos are played in these 2 windows. If 3 windows have been opened currently, the sum of the number of opened windows and the second number is calculated as the third number, which is 5. It is can be determined that the third number is not greater than 5. Thus, 2 new windows will be opened to play the target sub-videos. In this instance, if the electronic device support 4 windows at most to simultaneously play sub-videos, it is can be determined that the third number 5 is greater than the maximum number 4 of supported windows. Based on the difference 1 between the third number and the preset threshold, 1 window that is playing a video is determined. This window is closed and then is reopened. Alternatively, instead of closing the window, the video that is being played in the window is stopped, and another new window will be opened to play the target sub-videos in the determined 1 window and the new window.

A window that is determined to be closed may be a window randomly chosen, or may be a window that the video therein has been played for the shortest time, or may also be a window that the remaining part of the video therein requires the shortest time to be played over, or the like. If the file header of the merged video file further includes priority of each of the sub-videos, a to-be-closed sub-video may also be determined based on the priority, and a window in which the to-be-closed sub-video is being played is closed. For example, a sub-video with a maximum priority is used as the to-be-closed sub-video, or a sub-video with a minimum priority is used as the to-be-closed sub-video, or the like.

In another case, if the user's selection instruction is received after step S504, and it is determined that the number of the opened windows is not less than the preset threshold, the sub-video(s) selected by the user may be start to be played after the sub-video playing in an opened window is finished.

For the above example, the merged video file includes 5 sub-videos (N is 5), i.e., the sub-video 1, the sub-video 2, the sub-video 3, the sub-video 4 and the sub-video 5. It is assumed that the electronic device supports 4 windows at most to simultaneously play sub-videos. At S504, 4 windows are opened to play the sub-video 1, the sub-video 2, the sub-video 3 and the sub-video 4. During the playing, the user selects the sub-video 5 to play. In this case, the sub-video 5 may be played after one of 4 sub-videos being played in the opened windows is finished.

In the solution, the acquired merged video file may include an index segment in addition to the file header and the data segment. The index segment maintains keyframe indexes for the sub-videos. The position of the keyframe of the sub-video can be quickly positioned by querying its keyframe index.

The merged video file can further include an index segment. Correspondingly, the file header of the merged video file can also include the third position of a keyframe index for each sub-video in the merged video file. Thus, the position of the keyframe index for the sub-video can be determined by analyzing the file header of the merged video file, which further improves the speed of the loading of the merged video file.

The speed of loading the merged video file can be improved with the index segment in the merged video file. The indexes of keyframes of the merged video file may be loaded by acquiring the keyframe indexes for the sub-videos directly from the index segment without scanning the entire merged video file, so that the process of loading indexes of the keyframes will not be slow even if there are a large number of sub-videos.

Specifically, after the merged video file is acquired, the third position of each of the first number of sub-videos, i.e., the position of the keyframe index for the sub-video in the merged video file, may be acquired from the file header. Then, the keyframe indexes of the first number of sub-videos can be read from the merged video file based on the third positions. The order of this process and steps S502-S503 is not limited.

In this way, when opening the first number of windows to play the first number of sub-videos respectively, the positions of keyframes of respective sub-videos in the merged video file may be determined first based on the keyframe indexes. The first number of windows are then opened, and a sub-video for each of the windows is determined. The keyframe of the sub-video is first loaded based on the position, in the merged video file, of the keyframe of the sub-video for the window, and then the sub-video for the window is played. This thereby improves the speed of loading the merged video file.

As seen from above, in playing a merged video file by the video playing method provided by the embodiment of the present application, the first positions of the first number of sub-videos may be acquired from the file header of the merged video file; the first number of sub-videos are read from the merged video file based on the first positions; and then a first number of windows are opened to play the first number of sub-videos respectively. Therefore, the embodiment of the present application allows to play the merged video file in multiple windows.

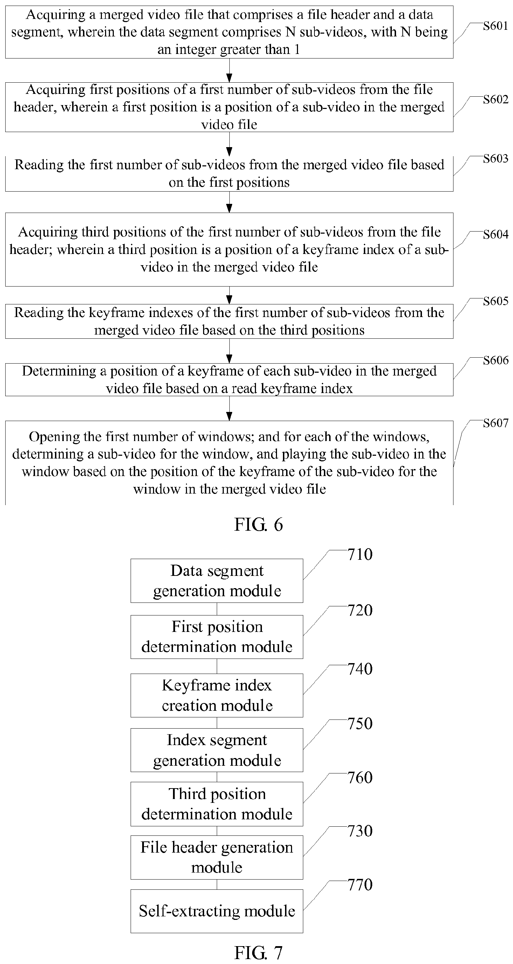

FIG. 6 shows a second schematic flowchart of a video playing method provided by an embodiment of the present application. The method includes the steps S601-S607.

At S601, a merged video file including a file header and a data segment is acquired. The data segment includes N sub-videos, with N being an integer greater than 1.

The merged video file is generated by merging multiple sub-videos by using the video synthesis method provided by the embodiments of the present application.

In an implementation, the merged video file and a player are compressed using a self-extracting method. The self-extracting file is obtained before the merged video file is acquired. A user can decompress the self-extracting file to extract the player and the merged video file to a specified position by means of a self-extracting program in the self-extracting file. During the decompression, the decompression progress may also be displayed in real time. In this way, the merged video file is acquired from the self-extracting file. At the same time, the player that can play the merged video file is also acquired, and then the merged video file can be analyzed and played by the player. This saves the user from downloading and installing the player, and also increases the probability of a successful playback of the merged video file.

At S602, first positions of a first number of sub-videos are acquired from the file header. The first position of a sub-video is the position of the sub-video in the merged video file.

When playing the merged video file, the header of the merged video file is first analyzed to acquire the first position of each of the first number of sub-videos therein, which indicates where the sub-video is in the merged video file.

The first number may be the same as the number N of all sub-videos in the merged video file, that is, the first positions of all of the sub-videos in the merged video file may be acquired at the same time. The first number may also be different from the number N of all sub-videos in the merged video file. The first number may be set by an electronic device based on its conditions, such as the memory, computing power, etc.; or may be manually set by a user based on his or her needs; or may also be set randomly, which is not limited herein.

In an implementation, the file header of the merged video file further includes a priority of each of the sub-videos. In this way, the priorities of the sub-videos may be taken into consideration in acquiring the first positions of the first number of sub-videos from the file header.

First, the priority of each of the sub-videos is acquired from the file header, and the first number of target sub-videos are determined based on the priorities of respective the sub-videos. The first positions of the first number of target sub-videos are then acquired from the file header. The target sub-videos may be a first number of sub-videos with a maximum priority; or may be selected, based on a preset selection rule, from the sub-videos which are sorted by priority, which is not limited in the embodiment of the present application.

In addition, in an implementation, the file header of the merged video file may include an identifier of each of the sub-videos, such as the names or IDs of the sub-videos. After the merged video file is opened, the identifier of each of the sub-videos may be displayed, and the first number of target sub-videos may be determined based on a user's selection.

At S603, the first number of sub-videos are read from the merged video file based on the first positions.

The first position is the position where the sub-video is located in the merged video file. Therefore, the sub-videos can be positioned based on their first positions, the first number of sub-videos can then be read from the respective positions of the data segment in the merged video file.

At S604, third positions of the first number of sub-videos are acquired from the file header. A third position is the position, in the merged video file, of a keyframe index of a sub-video.

In the solution, the acquired merged video file may include an index segment in addition to the file header and the data segment. The index segment maintains keyframe indexes for the sub-videos. The position of the keyframe of the sub-video can be quickly positioned by querying its keyframe index.

The merged video file can further include an index segment. Correspondingly, the file header of the merged video file can also include the third position of a keyframe index for each sub-video in the merged video file. Thus, the position of the keyframe index for the sub-video can be determined by analyzing the file header of the merged video file, which further improves the speed of the loading of the merged video file.

At S605, the keyframe indexes of the first number of sub-videos are read from the merged video file based on the third positions.

The index segment maintains keyframe indexes for the sub-videos. The position of the keyframe of the sub-video can be quickly positioned by querying its keyframe index.

At S606, the position of the keyframe of each of the sub-videos in the merged video file is determined based on the keyframe indexes.

The indexes of keyframes of the merged video file may be loaded by acquiring the keyframe indexes for the sub-videos directly from the index segment without scanning the entire merged video file, so that the process of loading indexes of the keyframes will not be slow even if there are a large number of sub-videos.

The order of the steps of S604-S606 and S602-S603 is not limited.

At S607, a first number of windows are opened; and for each of the windows, a sub-video for the window is determined and is played in the window based on the position of the keyframe of the sub-video for the window in the merged video file.

In this way, when opening the first number of windows to play the first number of sub-videos respectively, the positions of keyframes of respective sub-videos in the merged video file may be determined first based on the keyframe indexes. The first number of windows are then opened, and a sub-video for each of the windows is determined. The keyframe of the sub-video is first loaded based on the position, in the merged video file, of the keyframe of the sub-video for the window, and then the sub-video for the window is played in this window. This thereby improves the speed of loading the merged video file. After some of the sub-videos have been played, other sub-videos that have not been played may be played subsequently.

In an implementation, the file header of the merged video file further includes identifier of each of the sub-videos, such as the name or ID of each of the sub-videos. In this way, when the merged video file is opened, the identifier of each of the to-be-merged videos may be displayed at the same time. A sub-video, the identifier of which is selected by the user, may be played.

For example, a user's selection instruction may be received at any time during playing of sub-videos, and a sub-video or sub-videos that the user wants to play are determined.

For example, after step S607, if the user's selection instruction is received, it can be determined whether the number of the opened windows is less than a preset threshold. If the number of the opened windows is less than the preset threshold, a new window or windows will be opened to play the target sub-video(s). If the number of the opened windows is equal to the preset threshold, the windows playing videos will be closed and other window(s) will opened to play the target sub-video(s).

For example, the merged video file includes 5 sub-videos (N is 5), i.e., the sub-video 1, the sub-video 2, the sub-video 3, the sub-video 4 and the sub-video 5. It is assumed that the electronic device supports at most 5 windows to play sub-videos simultaneously, and the user selects 2 of the sub-videos to play. If the number of currently opened windows is 3, 2 new windows will be opened to play the target sub-videos. If the number of currently opened windows is 5, 2 windows playing video will be closed first and then 2 windows are opened to play the target sub-videos.

A window that is determined to be closed may be a window randomly chosen, or may be a window that the video therein has been played for the shortest time, or may also be a window that the remaining part of the video therein requires the shortest time to be played over, or the like. If the file header of the merged video file further includes priority of each of the sub-videos, a to-be-closed sub-video may also be determined based on the priority, and a window in which the to-be-closed sub-video is being played is closed. For example, a sub-video with a maximum priority is used as the to-be-closed sub-video, or a sub-video with a minimum priority is used as the to-be-closed sub-video, or the like.

In another case, if the user's selection instruction is received after step S607, and it is determined that the number of the opened windows is not less than the preset threshold, the sub-video(s) selected by the user may be start to be played after the sub-video playing in an opened window is finished.

For the above example, the merged video file includes 5 sub-videos (N is 5), i.e., the sub-video 1, the sub-video 2, the sub-video 3, the sub-video 4 and the sub-video 5. It is assumed that the electronic device supports 4 windows at most to simultaneously play sub-videos. At S504, 4 windows are opened to play the sub-video 1, the sub-video 2, the sub-video 3 and the sub-video 4. During the playing, the user selects the sub-video 5 to play. In this case, the sub-video 5 may be played after one of 4 sub-videos being played in the opened windows is finished.

As seen from above, in playing a merged video file by the video playing method provided by the embodiment of the present application, the first positions of the first number of sub-videos may be acquired from the file header of the merged video file; the first number of sub-videos are read from the merged video file based on the first positions; and then a first number of windows are opened to play the first number of sub-videos respectively. Therefore, the embodiment of the present application allows to play the merged video file in multiple windows.

Based on the same concept of the above video merging method, an embodiment of the present application further provides a video merging apparatus. FIG. 7 is a schematic diagram showing the structure of a video merging apparatus provided by an embodiment of the present application. The apparatus includes:
a data segment generation module 710, configured for merging N to-be-merged videos to obtain a data segment for a merged video file, wherein N is an integer greater than 1;
a first position determination module 720, configured determining a first position of each to-be-merged video in the merged video file; and
a file header generation module 730, configured for generating a file header for the merged video file based on the first positions, and obtaining the merged video file including the data segment and the file header.

In an implementation, the apparatus further includes:
a keyframe index creation module 740, configured for, for each to-be-merged video, determining a second position of a keyframe of the to-be-merged video in the merged video file, and creating a keyframe index for the to-be-merged video based on the second position;
an index segment generation module 750, configured for generating an index segment for the merged video file based on the keyframe indexes of the to-be-merged videos; and
a third position determination module 760, configured for determining a third position of the keyframe index of each to-be-merged video in the merged video file.

The file header generation module 730 is specifically configured for generating the file header for the merged video file based on the first positions and the third positions, and obtaining the merged video file including the data segment, the file header and the index segment.

In an implementation, the first position determination module 720 is specifically configured for: determining a data amount of the file header based on N, as a first data amount; and for each to-be-merged video, determining the first position of the to-be-merged video in the merged video file, based on a position of the to-be-merged video in the data segment and the first data amount.

The keyframe index creation module 740 is specifically configured for determining the second position of the keyframe of the to-be-merged video in the merged video file, based on a position of the keyframe of the to-be-merged video in the data segment and the first data amount.

The third position determination module 760 is specifically configured for determining a sum of data amounts of the N to-be-merged videos, as a second data amount of the data segment; and for each of the to-be-merged videos, determining the third position of the keyframe index of the to-be-merged video in the merged video file, based on a position of the keyframe index of the to-be-merged video in the index segment, the first data amount and the second data amount.

In an implementation, the keyframe index creation module 740 is specifically configured for determining the second position of the keyframe of the to-be-merged video in the merged video file by decoding the to-be-merged video.

In an implementation, the file header generation module 730 is specifically configured for acquiring a priority for each to-be-merged video; and generating the file header for the merged video file based on the first positions and the priorities of the to-be-merged videos.

In an implementation, the data segment generation module 710 is specifically configured for acquiring sequentially the N to-be-merged videos in a set order, and merging the acquired N to-be-merged videos in the order, to obtain the data segment for the merged video file.

In an implementation, the apparatus further includes:
a self-extracting module 770, configured for compressing the merged video file and a preset player by using a self-extracting algorithm to obtain a self-extracting file.

As seen from above, in the video merging method provided by the embodiment of the present invention, N to-be-merged videos are merged into a data segment for a merged video file. The first position of each to-be-merged video in the merged video file is then determined, and a file header for the merged video file is generated based on the first positions. The merged video file including the data segment and the file header is thus obtained. The obtained merged video file is a video file that can be played in multiple windows.

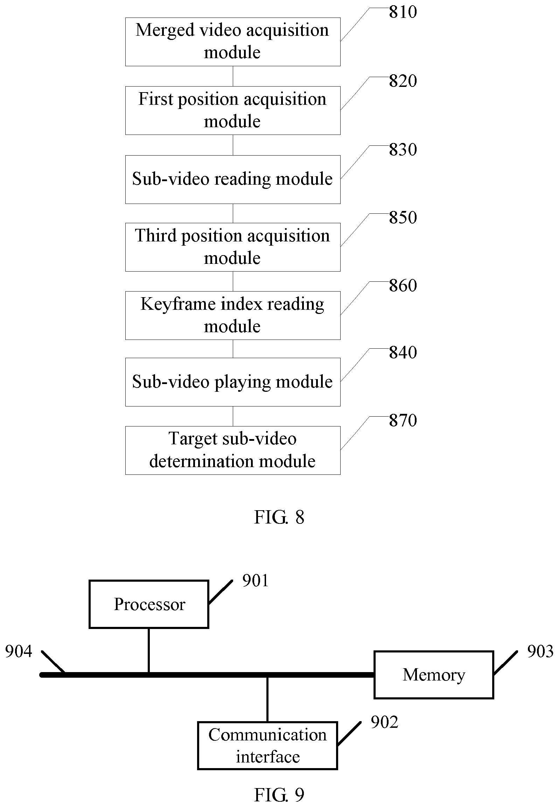

An embodiment of the present application further provides a video playing apparatus. FIG. 8 is a schematic diagram showing the structure of the video playing apparatus provided by an embodiment of the present application. The apparatus includes:
a merged video acquisition module 810, configured for acquiring a merged video file that includes a file header and a data segment, wherein the data segment includes N sub-videos, with N being an integer greater than 1;
a first position acquisition module 820, configured for acquiring first positions of a first number of sub-videos from the file header, wherein a first position is a position of a sub-video in the merged video file;
a sub-video reading module 830, configured for reading the first number of sub-videos from the merged video file based on the first positions; and
a sub-video playing module 840, configured for opening a first number of windows to play the first number of sub-videos respectively.

In an implementation, the merged video file further includes an index segment, and the apparatus further includes:
a third position acquisition module 850, configured for acquiring third positions of the first number of sub-videos from the file header; wherein a third position is a position of a keyframe index of a sub-video in the merged video file; and
a keyframe index reading module 860, configured for reading the keyframe indexes of the first number of sub-videos from the merged video file based on the third positions.

The sub-video playing module 840 is specifically configured for: determining a position of a keyframe of each sub-video in the merged video file based on a read keyframe index; opening the first number of windows; and for each of the windows, determining a sub-video for the window; and playing the sub-video in the window based on the position of the keyframe of the sub-video for the window in the merged video file.

In an implementation, the file header of the merged video file includes an identifier of each of the sub-videos. The apparatus further includes:
a target sub-video determination module 870, configured for: selecting a target sub-video(s) based on a user's selection instruction and the identifier of each of the sub-video(s); determining whether the number of the opened windows is less than a preset threshold; if the number of the opened windows is less than the preset threshold, opening a new window(s) to play the target sub-video(s); otherwise, if the number of the opened windows is equal to the preset threshold, closing a window(s) playing video and reopening the window(s) to play the target sub-videos.

In an implementation, the file header of the merged video file further includes priorities of respective sub-videos.

The target sub-video determination module 870 is specifically configured for determining a sub-video to be stopped based on the priorities; and closing a window in which the sub-video to be stopped is being played.

In an implementation, the file header of the merged video file further includes priorities of respective sub-videos.

The first position acquisition module 820 is specifically configured for acquiring the priority of each of the sub-videos from the file header; determining the first number of target sub-videos based on the priority of each of the sub-videos; and acquiring the first positions of the first number of target sub-videos from the file header.

In an implementation, the merged video acquisition module 810 is specifically configured for acquiring a self-extracting file; and decompressing the self-extracting file to obtain a player and the merged video file.

The first position acquisition module 820 is specifically configured for acquiring, by the player, the first positions of the first number of sub-videos from the file header.

The sub-video reading module 830 is specifically configured for reading, by the player, the first number of sub-videos from the merged video file based on the first positions.

The sub-video playing module 840 is specifically configured for opening, by the player, the first number of windows to play the first number of sub-videos respectively.

As seen from the above, merged video file can be played by a video playing apparatus provided by the embodiment of the present application as follows. The first positions of the first number of sub-videos are acquired from the file header of the merged video file. The first number of sub-videos are read from the merged video file based on the first positions. A first number of windows are then opened to play the first number of sub-videos respectively. Therefore, the embodiment of the present application can play the merged video file in multiple windows.

An embodiment of the present application further provides an electronic device. As shown in FIG. 9, the electronic device includes a processor 901, a communication interface 902, a memory 903 and a communication bus 904. The processor 901, the communication interface 902 and the memory 903 communicate with each other via the communication bus 904.

The memory 903 is configured for storing a computer program.

The processor 901 is configured for, when executing the program stored in the memory 903, performing the steps of:
merging N to-be-merged videos to obtain a data segment for a merged video file, wherein N is an integer greater than 1;
determining a first position of each to-be-merged video in the merged video file; and
generating a file header for the merged video file based on the first positions, and obtaining the merged video file including the data segment and the file header.

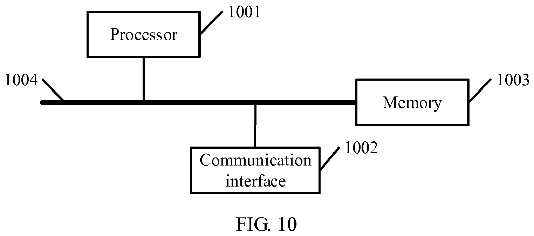

An embodiment of the present application further provides another electronic device. As shown in FIG. 10, the electronic device includes a processor 1001, a communication interface 1002, a memory 1003 and a communication bus 1004. The processor 1001, the communication interface 1002 and the memory 1003 communicate with each other via the communication bus 1004.

The memory 1003 is configured for storing a computer program.

The processor 1001 is configured for, when executing the program stored in the memory 1003, performing the steps of:
acquiring a merged video file that includes a file header and a data segment, wherein the data segment includes N sub-videos, with N being an integer greater than 1;
acquiring first positions of a first number of sub-videos from the file header, wherein a first position is a position of a sub-video in the merged video file;
reading the first number of sub-videos from the merged video file based on the first positions; and
opening a first number of windows to play the first number of sub-videos respectively.

The communication bus in the above electronic devices may be a peripheral component interconnect (PCI) bus or an extended industry standard architecture (EISA) bus and the like. This communication bus may include an address bus, a data bus, a control bus, or the like. For ease of illustration, only one thick line is shown in the figures, which does not indicate that there is only one communication bus or one type of communication buses.

The communication interface is configured for communication between the above-described electronic advices and other advices.

The memory may include a random access memory (RAM), or may include a non-volatile memory (NVM), for example at least one disk memory. Optionally, the memory may also be at least a storage apparatus located away from the processor.

The above processor may be a general-purpose processor, such as a central processing unit (CPU), a network processor (NP), or the like. It may also be a digital signal processor (DSP), an application specific integrated circuit (ASIC), a field-programmable gate array (FPGA) or other programmable logic device, discrete gate, or a transistor logic device, discrete hardware component.

As seen from the above, the electronic devices provided by the embodiments of the present application can generate a merged video file that can be played in multiple windows, and play the merged video file in multiple windows.

Another embodiment provided by the present application also provides a computer readable storage medium. The computer readable storage medium stores instructions that, when being executed on a computer, cause the computer to implement the video merging method and/or the video playing method of any of the above embodiments.

Another embodiment provided by the present application also provides a computer program product including instructions that, when executed on a computer, cause the computer to implement the video merging method and/or the video playing method of any of the above embodiments.

Above embodiments can be implemented fully or partially in software, hardware, firmware or any combination thereof. In a software implementation, the examples can be embodied fully or partially in a computer program product comprising one or more computer instructions. The computer instruction(s), when loaded and executed on a computer, implement some or all of the flows or functions according to the embodiments of the present application. The computer may be a general purpose computer, a special purpose computer, a computer network or other programmable device. The computer instructions may be stored on a computer readable storage medium, or transmitted from one computer readable storage medium to another. For example, the computer instructions can be transmitted from a website, computer, server or data center to another website, computer, server or data center via a wired (e.g., coaxial cable, optical fiber, or digital subscriber (DSL)) or wireless (e.g., infrared, radio or microwave) connection. The computer readable storage medium may be any available medium accessible to a computer, or a data storage device, such as a server or data center, having one or more available medium integrated therein. The available medium may be a magnetic medium (e.g., software, hardware or magnetic tape), an optical medium (e.g., DVD), or a semiconductor medium (e.g., solid state disk (SSD)).

Optionally, relationship terms such as "first", "second", and the like in the specification are solely for distinguishing one entity or operation from another, but do not necessarily require or imply that there is any actual relationship or order between these entities or operations. Moreover, terms such as "include", "comprise" or any other variants thereof are intended to be non-exclusive, so that processes, methods, articles or devices comprising a series of elements may comprise not only those elements listed but also those not explicitly listed or the elements intrinsic to these processes, methods, articles, or devices. Without further limitations, elements defined by the wording "comprise(s) a" or "include(s) a" do not exclude that there are other identical elements in the processes, methods, articles, or devices which include these elements.

All of the embodiments in the description are described in a correlated manner, and description of a component in an embodiment may apply to another containing the same. The description for each embodiment focuses on the differences from other embodiments. In particular, a brief description is provided to embodiments of apparatuses and devices in view of their resemblance with the method embodiments. Relevant details can be known with reference to the description of the method embodiments.

The embodiments described above are only preferable embodiments of the present application, and are not intended to limit the scope of protection of the present application. Any modification, equivalent, and improvement within the spirit and principle of the present application are all within the scope of protection of the present application.

## Claims

1. A video merging method, comprising:
merging N to-be-merged videos to obtain a data segment for a merged video file, wherein N is an integer greater than 1;
determining a first position of each to-be-merged video in the merged video file; and
generating a file header for the merged video file based on the first positions, and obtaining the merged video file comprising the data segment and the file header.

2. The method of claim 1, further comprising:
for each to-be-merged video, determining a second position of a keyframe of the to-be-merged video in the merged video file, and creating a keyframe index for the to-be-merged video based on the second position;
generating an index segment for the merged video file based on the keyframe indexes of the to-be-merged videos; and
determining a third position of the keyframe index of each to-be-merged video in the merged video file;
wherein generating a file header for the merged video file based on the first positions, and obtaining the merged video file comprising the data segment and the file header, comprises:
generating the file header for the merged video file based on the first positions and the third positions, and obtaining the merged video file comprising the data segment, the file header and the index segment.

3. The method of claim 2, wherein determining a first position of each to-be-merged video in the merged video file, comprises:
determining a data amount of the file header based on N, as a first data amount; and
for each to-be-merged video, determining the first position of the to-be-merged video in the merged video file, based on a position of the to-be-merged video in the data segment and the first data amount;
wherein determining a second position of a keyframe of the to-be-merged video in the merged video file, comprises:
determining the second position of the keyframe of the to-be-merged video in the merged video file, based on a position of the keyframe of the to-be-merged video in the data segment and the first data amount;
and wherein determining a third position of the keyframe index of each to-be-merged video in the merged video file, comprises:
determining a sum of data amounts of the N to-be-merged videos, as a second data amount of the data segment; and
for each of the to-be-merged videos, determining the third position of the keyframe index of the to-be-merged video in the merged video file, based on a position of the keyframe index of the to-be-merged video in the index segment, the first data amount and the second data amount.

4. The method of claim 2, wherein determining a second position of a keyframe of the to-be-merged video in the merged video file, comprises:
determining the second position of the keyframe of the to-be-merged video in the merged video file by decoding the to-be-merged video.

5. The method of claim 1, wherein generating a file header for the merged video file based on the first positions, comprises:
acquiring a priority for each to-be-merged video; and
generating the file header for the merged video file based on the first positions and the priorities of the to-be-merged videos.

6. The method of claim 1, wherein merging N to-be-merged videos to obtain a data segment for a merged video file, comprises:
acquiring sequentially the N to-be-merged videos in a set order, and merging the acquired N to-be-merged videos in the order, to obtain the data segment for the merged video file.

7. The method of claim 1, further comprising:
compressing the merged video file and a preset player by using a self-extracting algorithm to obtain a self-extracting file.

8. A video playing method, comprising:
acquiring a merged video file that comprises a file header and a data segment, wherein the data segment comprises N sub-videos, with N being an integer greater than 1;
acquiring first positions of a first number of sub-videos from the file header, wherein a first position is a position of a sub-video in the merged video file;
reading the first number of sub-videos from the merged video file based on the first positions; and
opening a first number of windows to play the first number of sub-videos respectively.

9. The method of claim 8, wherein the merged video file further comprises an index segment, and wherein after the merged video file is acquired, the method further comprises:
acquiring third positions of the first number of sub-videos from the file header; wherein a third position is a position of a keyframe index of a sub-video in the merged video file; and
reading the keyframe indexes of the first number of sub-videos from the merged video file based on the third positions;
and wherein opening a first number of windows to play the first number of sub-videos respectively, comprises:
determining a position of a keyframe of each sub-video in the merged video file based on a read keyframe index;
opening the first number of windows; and for each of the windows, determining a sub-video for the window, and playing the sub-video in the window based on the position of the keyframe of the sub-video for the window in the merged video file.

10. The method of claim 8, wherein the file header of the merged video file comprises an identifier of each of the sub-videos; and wherein after opening the first number of windows to play the first number of sub-videos respectively, the method further comprises:
selecting a second number of target sub-videos based on a selection instruction from a user and the identifier of each of the sub-videos;
determining whether the number of the opened windows is less than a preset threshold; and
if the number of the opened windows is equal to the preset threshold, determining a second number of windows playing videos, and playing the target sub-videos in the determined windows;
if the number of the opened windows is less than the preset threshold, determining a sum of the number of the opened windows and the second number as a third number, and determining whether the third number is greater than the preset threshold;
if the third number is not greater than the preset threshold, opening new windows to play the target sub-videos;
if the third number is greater than the preset threshold, determining windows playing videos, the number of which equals to a difference between the third number and the preset threshold, opening a new window or windows, and playing the target sub-videos in the determined window or windows and the new windows.

11. The method of claim 10, wherein the file header of the merged video file further comprises a priority of each of the sub-videos; and wherein closing a window playing a video comprises:
determining a sub-video to be stopped based on the priorities; and
closing a window in which the sub-video to be stopped is being played.

12. The method of claim 8, wherein the file header of the merged video file further comprises a priority of each of the sub-videos; and wherein acquiring first positions of a first number of sub-videos from the file header, comprises:
acquiring the priority of each of the sub-videos from the file header;
determining the first number of target sub-videos based on the priority of each of the sub-videos; and
acquiring the first positions of the first number of target sub-videos from the file header.

13. The method of claim 8, wherein acquiring a merged video file, comprises:
acquiring a self-extracting file; and
decompressing the self-extracting file to obtain a player and the merged video file;
wherein acquiring first positions of a first number of sub-videos from the file header, comprises:
acquiring, by the player, the first positions of the first number of sub-videos from the file header;
wherein reading the first number of sub-videos from the merged video file based on the first positions, comprises:
reading, by the player, the first number of sub-videos from the merged video file based on the first positions;
and wherein opening a first number of windows to play the first number of sub-videos respectively, comprises:
opening, by the player, the first number of windows to play the first number of sub-videos respectively.

14. A video merging apparatus, comprising:
a data segment generation module, configured for merging N to-be-merged videos to obtain a data segment for a merged video file, wherein N is an integer greater than 1;
a first position module, configured for determining a first position of each to-be-merged video in the merged video file; and
a file header generation module, configured for generating a file header for the merged video file based on the first positions, and obtaining the merged video file comprising the data segment and the file header.

15. A video playing apparatus, comprising:
a merged video acquisition module, configured for acquiring a merged video file that comprises a file header and a data segment, wherein the data segment comprises N sub-videos, with N being an integer greater than 1;
a first position acquisition module, configured for acquiring first positions of a first number of sub-videos from the file header, wherein a first position is a position of a sub-video in the merged video file;
a sub-video reading module, configured for reading the first number of sub-videos from the merged video file based on the first positions; and
a sub-video playing module, configured for opening a first number of windows to play the first number of sub-videos respectively.

16. An electronic device, comprising a processor and a memory, wherein
the memory is configured for storing a computer program;
the processor is configured for executing the program stored on the memory to perform steps of the method of any one of claims 1-7.

17. An electronic device, comprising a processor and a memory, wherein
the memory is configured for storing a computer program;
the processor is configured for executing the program stored on the memory to perform steps of the method of any one of claims 8-13.

18. A computer readable storage medium storing a computer program, wherein the computer program, when executed by a processor, implements steps of the method of any one of claims 1-7.

19. A computer readable storage medium storing a computer program therein, wherein the computer program, when executed by a processor, implements steps of the method of any one of claims 8-13.
